# EUROPEAN PATENT SPECIFICATION

(11) **EP 3 091 449 B1**
(45) Date of publication and mention of the grant of the patent: **25.07.2018**
(21) Application number: 15166203.8
(22) Date of filing: 04.05.2015
(51) Int. Cl.: G06F 17/30

(54) **OPERATING A DATABASE SYSTEM**
BETRIEB EINES DATENBANKSYSTEMS
FONCTIONNEMENT D'UN SYSTÈME DE BASE DE DONNÉES

(43) Date of publication of application: 09.11.2016
(73) Proprietor: Deloitte Consulting GmbH, 40476 Düsseldorf (DE)
(72) Inventor: Grüner, Alex, 69190 Walldorf (DE); Ratzer, Peter, 86875 Waal (DE); Ryakhovskiy, Konstantin, 60323 Frankfurt (DE)
(74) Representative: Hohgardt, Martin

(56) References cited:
- EP-A1- 2 797 013
- JIANG GUO-QUAN ET AL: "Producing synoptic data structure for high speed data streams in telecommunication network management", COMPUTER SCIENCE&EDUCATION, 2009. ICCSE '09. 4TH INTERNATIONAL CONFERENCE ON, IEEE, PISCATAWAY, NJ, USA, 25 July 2009 (2009-07-25), pages 815-818, XP031523417, DOI: 10.1109/ICCSE.2009.5228163 ISBN: 978-1-4244-3520-3
- EDSON RAMIRO LUCAS FILHO ET AL: "Intra-query adaptivity for MapReduce query processing systems", 20140707; 20140707 - 20140709, 7 July 2014 (2014-07-07), pages 380-381, XP058054164, DOI: 10.1145/2628194.2628202 ISBN: 978-1-4503-2627-8
- BABCOCK B ET AL: "Load shedding for aggregation queries over data streams", PROCEEDINGS. 20TH INTERNATIONAL CONFERENCE ON DATA ENGINEERING - 30 MARCH-2 APRIL 2004 - BOSTON, MA, USA, IEEE COMPUT. SOC, LOS ALAMITOS, CA, USA, 30 March 2004 (2004-03-30), pages 350-361, XP010713788, DOI: 10.1109/ICDE.2004.1320010 ISBN: 978-0-7695-2065-0

## Description

### FIELD OF THE PRESENT DISCLOSURE

The present invention relates to operating a database system. More specifically, the invention relates to operating an in-memory database system.

### BACKGROUND

Several database systems are known in the art. A database is an organized collection of data sets. The data sets are typically organized to model aspects of reality in a way that supports processes requiring information. For example, a database may store revenues made, these revenues can be stored according to the product with which the revenues have been made, according to the year in which they were made or even with more granularity according to months or days they were made. Hence, for a specific year, a specific month, a specific day, and a specific product, the database can store the revenues made. It is understood that a database can store any arbitrary data sets. As such, a database can include a large number of data sets in different granularity. The granularity is also often referred to as the data set depth or tear level.

In order to manage the data sets in the database, so called database management systems are used, which are computer software applications that interact on the one side with a user or other applications and on the other side with the database and the data sets included in the database. Database management systems in general provide four main functionalities, namely data definition, updating, retrieving, and administration. Forming data definition thereby comprises creating, modifying and removing definitions that define the organization of the data sets. In the above-mentioned example, the revenues can be organized according to years, months, days, and products, or products, years, months, and days. It is evident that the organization of a database and the data sets is arbitrary and can be organized as such that data can quickly be found or to most closely model reality. Updating comprises inserting, modifying and deleting the actual data sets in the database. Retrieving comprises providing information in a form directly usable or for further processing by other applications based on database queries. The retrieved data may be made available in a form basically the same as it is stored in the database or in a new form obtained by altering, combining, or correlating existing data from the data sets, or performing any other operation with the data from the data sets. Administrating comprises registering and monitoring users, enforcing data security, monitoring performance, maintaining data integrity, dealing with concurrency control, and recovering data that has been corrupted by some event such as an unexpected system failure.

Both a database and its database management systems conform to the principles of a particular database model. A database model is a type of data model that determines the logical structure of a database and fundamentally determines in which manner data sets can be stored, organized, and manipulated, for example storing the data sets in a table-based format etc. The term database system refers collectively to the database model, database management system, and database. However, it is clear to a person skilled in the art that the term database system also can refer to any system for distributed processing of very large data sets on any arbitrary computer system, for example on a computer cluster. These database systems often use a distributed, scalable, and portable database file system shared among different computers.

The use of databases is thereby actually very diverse and at present they are used in all sorts of different areas. For example, databases are used to support internal operations of organizations and to underpin online interactions with customers and suppliers. Also, databases are used to hold administrative information and more specialized data, such as engineering data or economic models. Furthermore, databases can be used in production for availability-to-promise analysis, or for financial reporting (e.g. profile statement contribution), or for material management (e.g. inventory valuation). Thereby, databases and the data sets included in the database can be tailored specifically to meet the requirements of database users and/or to best model reality.

Physically, database servers are dedicated computers or computer clusters that hold the actual databases and run only the database management systems and related software.

Database servers are usually multiprocessor computers, with generous main memory. For storing the database system commonly RAID disk arrays are used. However, recently so-called in-memory database systems have become more common, which primarily rely on the main memory for storing the data sets of the database system. Accessing data in memory eliminates seek times when retrieving or updating data sets, which provides faster and more predictable performance than disk operated database systems. Examples of such in-memory databases are the HANA system from SAP, the DB2 system from IBM in its Version 10.5, or the Exalytics system from Oracle in its Version 12c.

However, both the disk operated database systems as well as the in-memory operated database systems have a drawback, namely that as more complex the database queries get, and as more user at the same time query the database, as more overhead in the system is produced. This overhead is produced by having to administrate contention situations among database queries and also by simply executing the queries themselves. Executing database queries in this context means to answer the queries. Hence, to retrieve the data queried and/or perform the defined operations to be performed with the retrieved data and present the querying users respectively the querying applications with the corresponding results. In particular for very complex queries - very versatile operations to be performed - and a high number of users, the overhead may be significant. In order to deal with such high load situations, it is common practice to procure more hardware, in order to ensure that the database system is still functional within the normal operational parameters, for example database queries are still executed within a predetermined time span. Therefore, when a new database system is commissioned, the hardware requirements for the lifespan - until the technology becomes obsolete - of the database system has to be predicted. The prediction may however be very difficult, since high loads may only be encountered during peak times, for example, when the quarterly business reports are created etc. As such, also only during these peak times more hardware must be procured, whereas during non-peak times less hardware can be used. It does therefore not make sense to procure more hardware at all times, in particular if not needed. The providers of database systems have accounted for these needs, by providing the database systems with more hardware as needed. Thereby, one part of hardware is dormant as long as it is not needed and once it is needed, the customers can activate the dormant resources for a certain fee. Procuring more hardware is however not only cost intensive, but also leads to increased power consumption. An increase in power consumption is not only because of environmental aspects unwanted, but also because of the increased costs which are associated with the increased power consumption. Also, having to activate dormant parts of the database system in itself causes delay times, because it takes a certain time before the dormant parts become fully operational. Furthermore, adding more hardware to the database causes administrational overhead. In any case, also the database systems with dormant hardware parts at some point in time will reach their physical limitation.

Therefore, there exists a need in the art to lower the loads put upon a database system, in particular under high load situations. Hence, situations in which many database queries and/or complex queries at the same time occur.

JIANG GUO-QUAN ET AL: "Producing synoptic data structure for high speed data streams in telecommunication network management", COMPUTER SCIENCE&EDUCATION, 2009. ICCSE '09. 4TH INTERNATIONAL CONFERENCE ON, IEEE, PISCATAWAY, NJ, USA, 25 July 2009 (2009-07-25), pages 815-818, DOI: 10.1109/ICCSE.2009.5228163 ISBN: 978-1-4244-3520-3 and BABCOCK B ET AL: "Load shedding for aggregation queries over data streams", PROCEEDINGS. 20TH INTERNATIONAL CONFERENCE ON DATA ENGINEERING - 30 MARCH-2 APRIL 2004 - BOSTON, MA, USA, IEEE COMPUT. SOC, LOS ALAMITOS, CA, USA, 30 March 2004 (2004-03-30), pages 350-361, DOI: 10.1109/ ICDE.2004.1320010 ISBN: 978-0-7695-2065-0 disclose respectively an adaptive data structure used for controlling the information of network traffic and adapting the hardware load by shedding unprocessed database data when the query load exceeds a threshold.

The object of the current invention is to provide a method and an apparatus foi operating a database system in high load situations. This object is solved by the subject-matter of the independent claims.

### SUMMARY

Thereby, a method is provided for operating a database system, wherein the method at first comprises analyzing a plurality of database queries. For example, the different database queries can be analyzed with regards to the data sets they are enquiring and/or the operation to be performed with the data sets. The enquired data sets are indicated within the database queries, respectively the database query source code, by ease of semantic keys. The semantic keys thereby indicate the data sets to be retrieved from the database and/or the data sets with which operations have to be performed. After the plurality of database queries have been analyzed, a data structure object within the database system is generated, wherein the data structure object comprises at least one data set indicated by the plurality of database queries. The data structure object as such may comprise a copy of at least a portion or the entire data sets indicated in the database queries and/or results of operations defined to be performed with the data sets indicated in the database queries. For example, if a database query indicates that revenues for a specific product shall be summed for a three months period, the data structure object may already include the result of this operation as one of its data sets. As such, the data structure object may comprise as its data sets either copies or at least partial copies of data sets stored in the database and/or results of operations to be performed with data of data sets stored in the database. Thereby, what shall be included in the data structure object is indicated by the semantic keys in the database queries respectively the operations defined in the database queries. As such, it can also be said that the data sets of the data structure object and the data sets in the database are linked or associated. It can also be said that the data sets in the generated data structure object are based upon the data sets in the database. The data structure object may thereby adapt the form and structure of the data sets as stored in the database, or may amend the form and structure of the data sets to be stored.

By collecting the indicated data sets within the generated data structure object, it can be ensured that further database queries, which indicate the same semantic keys as the originally analyzed database queries, can be executed or answered from one single data structure object, without having to execute every single database query on its own, which would mean accessing data sets individually and performing the operations individually, even so a number of database queries may query the same semantic keys or the same results of operations. As such, by using the generated data structure object this doubling overhead can be avoided and hardware resources can be saved, so that less hardware needs to be procured.

For optimizing purposes, the generated data structure object is dynamically modified based on hardware loads. Hardware loads can thereby be determined in terms of actual monitored processor and memory loads of the database system, or predicted processor and memory loads of the database system. The processor loads can thereby be determined in terms of the time needed to execute a database query on the data structure object and the memory load can be determined in terms of size of memory used for the data structure object and size of memory needed for an operation to be performed. These loads are proportional to the power consumption of the database system and can be expressed in terms of processor power consumption and memory power consumption, for example in the units of Watts or Joules. As processor and memory loads are proportional to power consumption, it can also be said that the dynamic modification of the data structure object is performed based on power consumption. Again, this power consumption may be the actually monitored power consumption or the predicted power consumption. Anyway, the loads are compared to at least one predefined threshold and when this threshold is exceeded or is going to be exceeded, the data structure object is modified to lower the hardware requirements. The at least one pre-defined threshold can thereby be based on the maximum processor load allowed or the maximum memory load allowed, which in turn means the at least one pre-defined threshold can be expressed in a maximum of power consumption allowed. In order to allow a fine granularity of modification of the data structure object, the hardware loads for each and every data set within the data structure object can be determined individually, either by monitoring the actual hardware loads or predicting them. When the data structure object is initialized, as such generated for the first time, the hardware loads can be predicted, for example based on monitoring the loads in the overall system and statistical values for generated previous data structure objects. This allows to set up prediction matrices regarding load versus hardware requirements and load versus execution times, which allows to predict the hardware loads needed to generate the data structure object. These prediction matrices do not only allow to assess the overall hardware load needed to generate the data structure object, but also can be broken down to the level of individual data sets or even data. For example, it can be predicted how much hardware load it will take to copy a particular data set from the database into the data structure object, or how much hardware load it will take to perform an operation with data sets etc. Once the data structure object is generated, the hardware loads can be actually monitored. For example, it can be monitored how much hardware load it takes to actually update certain data sets within the data structure object when a change in the data sets stored in the database occur or how much hardware load is taken up for actually performing the operations with the data sets as defined in the database queries. Even so in this phase the hardware loads can actually be monitored, it is also possible to use predictions. Having knowledge about the individual hardware loads allows a modification of the data structure object in terms of single data sets to optimally adapt the data structure object.

By using a data structure object to execute database queries and by dynamically modifying this data structure object dependent upon hardware loads of the database system, the optimal hardware workload can be found to cut off peak loads and more evenly distribute workloads over time, such that it is not necessary to procure any further hardware, but being able to execute even high number of database queries concurrently on the hardware as it is.

In a preferred embodiment example, hardware loads are determined individually for updating the data sets of the generated data structure object. Hence, for every data set included in the data structure object, the hardware load is determined it takes to update this specific data set. As such, individually means for every data set separately. Thereby, every hardware load can be assessed for different tier levels of the data set. In principle, determining hardware loads to the deepest tier level can mean to determine the hardware load required to update a single data in the data set. As the generated data structure object and its data sets are linked to the data sets stored in the database, the data sets of the generated data structure object have to be updated, when a change in the data sets of the database occurs. Updating in this respect means that either the data changed in the data set of the database is copied into the data set of the generated data structure object, in order to be added to a data set or to replace certain data, and/or the results of defined operations need updating due to the change in the data set of the database. This updating will be different for each data set in the generated data structure object, because the data sets in the database will have a different frequency of change. For example, the revenues for a product will change daily, whereas the product portfolio will only change in longer time intervals. Having determined the individual hardware loads for updating the data sets in the generated data structure object, it will be possible to modify the data structure object accordingly and take into account the different frequencies of change. This allows for an optimized data structure object without having to waste costly hardware resources. The individual hardware loads can thereby be determined in terms of processor and memory loads of the database system. The individual hardware loads can also be predicted from the knowledge of the frequency of change of the data sets in the database. Thereby, it is known that when a data set in the database will have a high frequency of change, also the hardware load for updating the linked data set in the generated data structure object will be high, as long as the update is performed in the same rate as the frequency of change and as long as all data changed in the data set of the database is also encompassed by the linked data set in the generated data structure object. Vice versa, if the data set in the database has a low frequency of change, then even if the linked data set in the data structure object is updated at the same rate, only low hardware loads will be encountered or none at all when these data are not included in the data structure object. Therefore, the individual hardware loads allow a dynamic modification of the data structure object with regards to the update rate used for the linked data sets in the data structure object as well as with regards to the exclusion and/or inclusion of data in the data sets in the generated data structure object, in order to react on the frequency of change of the data sets in the database and adapt the generated data structure object to make optimal use of the hardware resources.

In another preferred example, the dynamically modifying comprises determining an update rate for updating the data sets of the generated data structure object based at least in part on the individual hardware loads and updating the data sets of the generated data structure object according to the determined update rate. The data sets in the database will encounter changes in a certain frequency. The changes will thereby be indicated by triggers, so that a comparison with a former value is not necessary to identify a change. The triggers allow an analysis with regards to the number of changes and the frequency of change. Once the data sets in the database encounter a change, also the data sets within the generated data structure object have to be changed. The data sets within the generated data structure object can thereby be either updated every time a change in the data sets in the database occur, or they can be updated only once in a while. As such, the frequency of the change encountered in the data sets of the database can be different to the update rate of the generated data structure object. For example, if the update rate would be equal to the frequency of change, this would cause significant overhead. As such, in order to optimize the data structure object in view of the hardware loads only every N'th change in the data sets of the database, wherein N is a positive integer, an update of the data structure object can be performed. Thereby, the hardware loads can be determined in terms of processing times needed to update individual data sets in the generated data structure. For example, for each data set in the generated data structure object, the processing time for updating can be determined. Afterwards, maxima and minima of these processing times can be found. The update rate can then be determined by adding the maxima and minima and dividing the sum by the minima. This update rate can be influenced by a user, for example by setting a so-called service level agreement value, which allows to influence the actuality of the data sets in the data structure. This service level agreement value can be expressed in terms of processing times and can be added to the sum in the numerator of the aforementioned fraction. The update rate can thereby also be determined on the analyzed database queries themselves. For example, if the database queries indicate that they will only be executed on a periodic basis, the update rate can be set to this period minus the time it takes to update the respective data sets within the generated data structure object. For example, if the database queries are the quarterly business reports, it is sufficient to update the data structure object every three months minus the time it takes to update the data structure object. However, if during the three months period the frequency of change of the data sets in the database is high, it makes more sense to use an update rate, which is shorter than the three months, in order to avoid peaks in hardware load and instead distribute the hardware loads by using a fraction of the period indicated in the database requests. Even so the update rate determination as described above is based on simple determinations, it is evident to a person skilled in the art that also more complex strategies can be used to find an optimal update rate. For example, the update rate can be the output vector of a neural network analysis, which takes different factors with different weightings into consideration. Thereby, for example feedforward neural networks can be used. A person skilled in the art will recognize that the weightings in the neural network can thereby be defined by the user preferences and requirements or simply by the service level agreement value etc.

In yet another preferred example, the method comprises monitoring the current update rates of at least two data structure objects and shifting a starting time of an update cycle of a first data structure object of the at least two data structure objects with respect to a starting time of an update cycle of a second data structure object of the at least two data structure objects based on the monitored current update rates. Thereby, if several - at least two - generated data structure objects are stored within the database, the starting times of their update cycles can be coordinated. The starting times of the update cycles can thereby be assessed based on the update rates, which give the time between two consecutive update cycles. Thereby, the starting time of an update cycle is the time when the updating of the generated data structure objects starts. In order to best distribute the hardware loads over time and to avoid peaks the starting times of the updating of different generated data structure objects can be shifted. It is also possible that when shifting of the updating cycles is performed, this shifting is performed according to priority of the generated data structure objects. For example, one generated data structure object may have a higher priority as another generated data structure object, so that this generated data structure object is updated first. Thereby, the priority may for example be dependent upon the service level agreement value of the generated data structure object. The service level agreement thereby ensures a user that the data sets in the respective generated data structure object is not older than a specific time indicated by the service level agreement. Therefore, the update cycles of such a data structure object may not be delayed too long, since then the service level agreement and the actuality of the data sets in the generated data structure object cannot longer be ensured. It has to be understood that not only the starting times of complete update cycles of generated data structure objects among each other can be shifted, but also individual update cycles for the different data sets either within one generated data structure object or among at least two generated data structure objects. The shift of the update cycles may also be dependent upon the times between the last update cycle and the current update rate. If the shift of the update cycle would provoke that the next update would not be performed within the defined update rate, then the shift may only be performed if the margin by which the update rate is not met is allowable. The allowability can thereby for example be determined based on the analysis of the starting times of the update according to the determined update rate and whether a succeeding starting time of an update cycle could also not be met, if the current update cycle is shifted, because due to the shift the starting time of the current update cycle would already fall after the starting time of the update cycle according to determined update rate. By shifting the update, hardware loads can be better distributed over time and peak times can be avoided.

In yet another preferred example, the dynamically modifying the data structure object comprises determining data sets to be included and/or excluded from the data structure object based at least on the individual hardware loads and changing the data structure object according to the determined inclusions and/or exclusions. The generated data structure object comprises after an initialization phase all of the data sets indicated within the analyzed plurality of database requests. By including and excluding data sets of the generated data structure, it is possible to react on the frequency of change of the data sets in the database on which the data sets within the generated data structure are based. For example, some data sets in the database may encounter high frequency of change, however, the respective data may only be enquired by a low number of users. As such, due to the high hardware loads necessary to update the respective data sets within the generated data structure as compared to the hardware loads of executing the actual database queries by the low number of users, these data are excluded from the data sets of the generated data structure object, in order to better distribute hardware loads. If the data sets in the database may have a high frequency of change and also a high number of users enquiring the data sets, then these data remain in the generated data structure object and other data sets which are enquired by a lower number of users are sacrificed and excluded from the generated data structure object. On the other hand, if hardware loads indicate that still resources are unused, the generated data structure object can also be modified to include more data sets from the database, so that the generated data structure object can be used to execute database queries.

In another preferred example, the hardware loads based on which the generated data structure object is modified are determined in terms of individual processing times required for each and every data set in the data structure object to be processed respectively to be updated. For example, in an initial phase after the plurality of database enquiries have been analyzed, the data structure object is generated with, for example, each and every data set indicated in the database queries. Thereby, each data set can have different hierarchy depths or tier levels. For example, a data set indicating the revenues for products can include these revenues according to the product with which the revenues are made, according to the year, the month and the day the revenues are made. Therefore, each data set can have different hierarchy depths or tier levels, with different information. For example, the first tier level of the stored revenues can be the year, the second tier level can be the month of the year, the third tier level can be the day of the month, the fourth tier level can be the product and finally the fifth tier level can be the actual value for the revenue made with the specific product on the specific day of the specific month of the specific year. It is apparent that each tier level has different amounts of further tier levels before at the end only the actual value remains in the database. The tier levels thereby have actual parent child relationships. When individual loads are determined, individual loads can be determined for the different tier levels. For example, one hardware load can be determined which expresses the processing time it takes to update all values for the specific year. The next level down, it may be determined what would be the processing time to update a specific month of a specific year and so on. Thereby, processing times for updating different tier levels can be determined. These processing times can then be used to modify the generated data structure object. For example, if the individual processing time for a tier level is known, this processing time can be compared with the processing time of a next higher tier level - it parent tier level - and if it is determined that the next higher tier level has a processing time which is only by a certain amount higher than that of the lower tier level - the child tier level-, the complete higher tier level can remain in the data structure to keep the information about all child tier levels of the higher tier level accessible. On the other hand, if it is indicated that a lower tier level needs much less processing time, then only this tier level remains in the generated data structure object. The individual hardware loads in terms of processing times can also be used to modify the update cycles of the data structure object. Hence, the times between updates of data sets in the data structure object.

It is readily apparent for a person skilled in the art that the aforementioned modifying of the data structure object with respect to update rate and inclusion/exclusion of data sets can be performed either individually or in combination to allow for optimal exploitation of the available hardware resources.

In another preferred embodiment example, the analyzing of the plurality of database queries further comprises determining the complexity of the plurality of database queries. For example, database queries can be analyzed with regards to them comprising simple database procedures as for example online analytical processing, OLAP, or database procedures which only concern data sets with a low hierarchy depth, hence shallow tier levels. Such simple database procedures and the associated data sets can be excluded from the generated data structure object, since the resources needed to generate the data structure object and the resources occupied by the data structure object itself may exceed the resources needed for actually executing the simple database procedures. Thereby, a person skilled in the art will recognize that it is dependent upon the database system used to determine what can be regarded as a simple database procedure. Furthermore, the analyzing of the database queries may comprise at least one of determining the number of same database queries in the plurality of database queries, determining the predicted processing times for the plurality of database queries to be executed, determining the predicted hardware loads for the plurality of database queries to be executed, determining whether the plurality of database queries are simple database procedures and determining the tier level of the plurality of database queries. All these determined information give an indication regarding the complexity of the database queries and allow to determine whether or not to generate a data structure object. Thereby, thresholds can be predetermined dependent upon the database system used, which indicate when better to execute the database queries without a generated data structure object and when to generate a respective data structure object.

In one preferred example, the database of the database system is a disk operated database system, or an in-memory database system, or a combination thereof. A person skilled in the art will recognize that there are different forms of implementing a database system according to the invention, all of which are encompassed. For example, the database system can be implemented by a system for distributed processing of very large data sets.

The method described herein may also be implemented in software, the method may be realized at least in part by a non-transitory processor-readable storage medium comprising instructions that, when executed, perform the method as described above. The non-transitory processor-readable data storage medium may form part of a computer program product.

The object of the present invention will also be solved by an apparatus for operating a database system, wherein the apparatus comprises memory for storing data sets of a database of the database system. The memory can thereby be the main memory of at least one processor and/or a disk memory connected and accessible by the at least one processor. The apparatus itself can be a database server, which holds the database or at least part of the database and runs the database management system. The at least one processor of the apparatus is configured to analyze a plurality of database queries, generate a data structure object within the memory, wherein the data structure object comprises at least one data set indicated by the plurality of database queries, determine hardware loads on the memory and/or the at least one processor, and dynamically modify the data structure object based on the determined hardware loads. Thereby, the at least one processor can be further configured to derive from the hardware loads the power consumptions of the memory and the at least one processor. These power consumptions can then be used to dynamically modify the data structure object such that predetermined thresholds can be adhered to.

### BRIEF DESCRIPTION OF THE DRAWINGS

Further features and advantages will become apparent from the following and more particular description of the embodiment as illustrated in the accompanying drawings, and in which like referenced characters generally refer to the same parts or elements throughout the drawings, and in which:
- FIG. 1: shows a schematic of a database system executing database queries in real time individually;
- FIG. 2: shows a schematic of a database system according to an embodiment of the current invention executing database queries using a generated data structure object within the same database system as shown in Figure 1;
- FIG. 3: shows a graphical comparison between individual database query execution and execution via a generated data structure object;
- FIG. 4a: shows a flow chart of generating a data structure object according to an embodiment of the current invention;
- FIG. 4b: shows a flow chart of using and modifying a generated data structure object according to an embodiment of the current invention; and
- FIG. 5: shows a database server holding a database system according to an embodiment of the current invention.

### DETAILED DESCRIPTION

At the outset, it is to be understood that this disclosure is not limited to particularly exemplified materials, architectures, routines, methods or structures as such may vary. Thus, although a number of such options, similar or equivalent to those described herein, can be used in the practice or examples of this disclosure, examples of suitable materials and methods are described herein.

It is also to be understood that the terminology used herein is for the purpose of describing particular examples of this disclosure only and is not intended to be limiting.

The detailed description set forth below in connection with the appended figures is intended as a description of exemplary embodiments and is not intended to represent the only embodiments. The term "exemplary" used throughout this description means "serving as an example, instance, or illustration", and should not necessarily be construed as preferred or advantageous over other examples The detailed description includes specific details for the purpose of providing a thorough understanding of the examples of the specification. It will be apparent to those skilled in the art that the examples of the specification may be practiced without these specific details. In some instances, well known structures and devices are shown in block diagram form in order to avoid obscuring the novelty of the examples
presented herein.

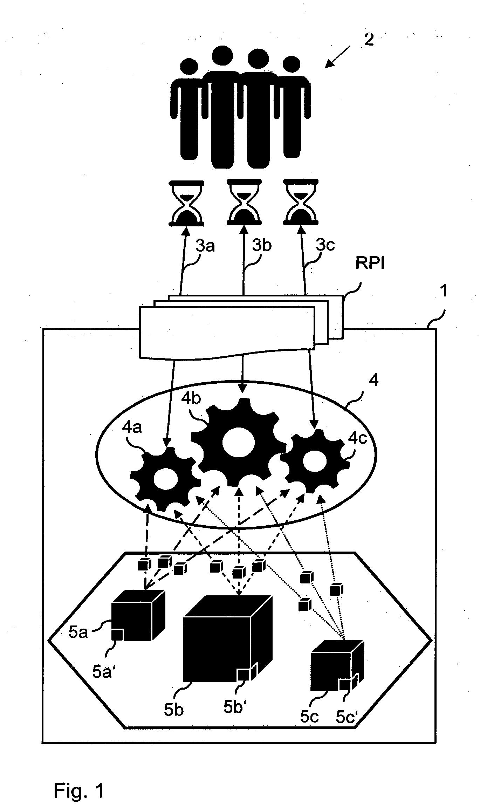

Figure 1 shows a schematic of a database system 1 and users 2 of the database system 1. Even so the users 2 of the database system 1 are shown as of humanoids, it is clear to a person skilled in the art that the users 2 can also be other applications or client computers - here not shown - which query the database system 1 via a reporting interface, RPI. It is however understood by a person skilled in the art that there are several possibilities to query a database system 1 and the one shown in this example is only one of them. As such, any query mechanism known shall be encompassed. The database system 1 is queried by the users 2 by ease of database queries 3a, 3b, 3c. The database system 1 contains data sets 5a, 5b, 5c in a specific format, also often called database tables. A database table is conceptually a two-dimensional or three-dimensional structure composed of cells arranged in rows and columns, wherein several of these rows and columns can be arranged behind each other. However, since computer memory is structured linearly, there are two options for the sequences of cell values stored in contiguous memory locations, the first is row storage and the second is column storage. In the first case the values are stored in a sequence of rows and in the second case the values are stored in a sequence of columns i.e. the entries of a column are stored in contiguous memory locations. These database tables or data sets 5a, 5b, 5c take up a certain amount of memory in the database system 1, which is indicated by the different sizes of the cubes representing the different data sets 5a, 5b, 5c. It is apparent to a person skilled in the art that even so the data sets 5a, 5b, 5c are represented as separate cubes in Figure 1, this is only done for illustrating purposes and it is evident that these data sets 5a, 5b, 5c can be stored in a continuous manner in the memory of the database system 1. The data sets 5a, 5b, 5c contain data set portions or excerpts 5a', 5b', 5c', which can either be single data or a subset of data from the data sets 5a, 5b, 5c.

The database system 1 as shown in Figure 1 also comprises an execution engine 4, which executes or performs the database queries 3a, 3b, 3c. Hence, the execution engine 4 runs on processors affiliated with the database system 1 and performs the database queries 3a, 3b, 3c. Thereby, performing the database queries 3a, 3b, 3c means retrieving at least partial excerpt 5a', 5b', 5c' from the data sets 5a, 5b, 5c stored in the database system 1. The retrieval thereby also encompasses calculation operations performed with the partial excerpts 5a', 5b', 5c' from the data sets 5a, 5b, 5c. Thereby, the database queries 3a, 3b, 3c all include queries which indicate the same semantic keys, namely data set excerpts 5a', 5b', 5c'. As such, for executing the three database queries 3a, 3b, 3c, each data set 5a, 5b, 5c has to be accessed at least three times. Dependent upon the complexity of the database queries 3a, 3b, 3c, for example, the operation defined to be performed with the data set excerpts 5a', 5b', 5c', the execution engine 4 will need different execution times 4a, 4b, 4c to perform or answer the database queries 3a, 3b, 3c. Answering a database query 3a, 3b, 3c thereby means to retrieve the respective at least partial excerpt 5a', 5b', 5c' from the data sets 5a, 5b, 5c and present them or the results of defined operations to be performed with the excerpts 5a', 5b', 5c' via the reporting interface, RPI, to the users 2.

The execution engine 4 is physically limited by the processing resources - number of processors / processing power of the processors - available in the database system 1. Hence, there is a maximum number of database queries 3a, 3b, 3c or a maximum complexity of database queries 3a, 3b, 3c which can be handled concurrently by a database system 1. Hence, a maximum number of database queries 3a, 3b, 3c which can be executed in parallel. Furthermore, since all database queries 3a, 3b, 3c in the here shown embodiment example query the same excerpts 5a', 5b', 5c', also contention situation must be handled, which in turn puts administrative overhead on the system. Thereby, it has to be understood that even so in this embodiment example only three database queries 3a, 3b, 3c are shown for real database systems, there may be hundreds or thousands of concurrent database queries. As such, in particular at peak times for the occurrence of large numbers of database queries 3a, 3b, 3c, for example at times when the quarterly business reports are generated, or the system has a high user 2 load, or very complex database queries 3a, 3b, 3c are formulated, the database system 1 may reach its physical limitation. In this case either new hardware has to be procured, or the database queries 3a, 3b, 3c cannot be all executed in parallel, but have to be executed in a sequential manner, which leads to unwanted delays.

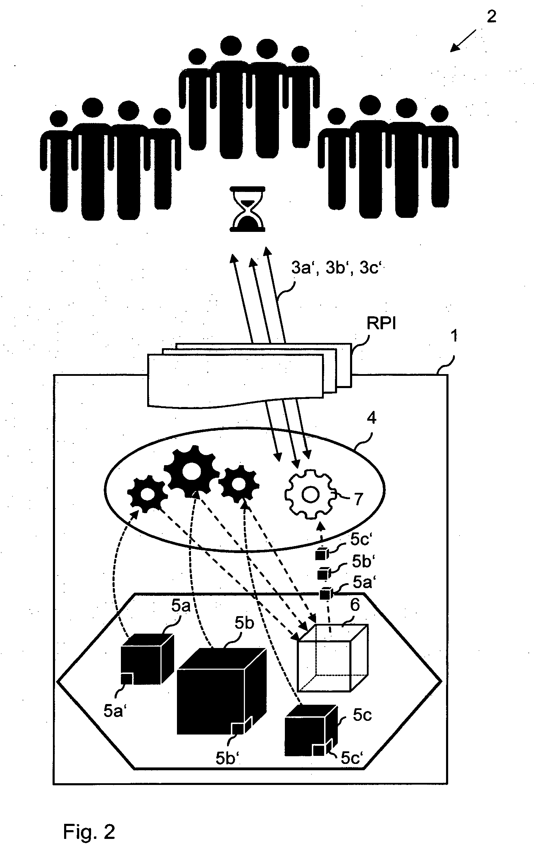

Figure 2 shows a schematic of a database system 1 according to an embodiment of the current invention, with which the aforementioned limitation can be alleviated. The database system 1 according to Figure 2 as compared to the database system 1 according to Figure 1 does comprise a data structure object 6, which comprises at least excerpts 5a', 5b', 5c' of data sets 5a, 5b, 5c. These excerpts 5a', 5b', 5c' are the ones which are indicated by the semantic keys present in the original database queries 3a, 3b, 3c as shown in Figure 1. These original database queries 3a, 3b, 3c have been analyzed, for example with regards to their complexity, number of same semantic keys queried etc. and the respective excerpts 5a', 5b', 5c' have been summarized within the generated data structure object 6. This data structure object 6 can also include the result of operations indicated to be performed in the original database queries 3a, 3b, 3c with the excerpts 5a', 5b', 5c'. The data structure object 6 as such acts as a precalculated data structure object 6 with which database queries 3a', 3b' and 3c' can be answered, when these database queries 3a', 3b', 3c' indicate the same semantic keys and as such query data set excerpts 5a', 5b', and 5c' and/or operations to be performed with the excerpts 5a', 5b', and 5c'. Thereby, since the data structure object 6 already encompasses the excerpts 5a', 5b', 5c' respectively the results of operations defined to be performed with the excerpts 5a', 5b', 5c' indicated by the semantic keys in the original database queries 3a, 3b, 3c, the execution times 4a, 4b, 4c which are normally necessary to execute the database queries 3a, 3b, 3c can be summarized into one single execution time 7. This single execution time 7 is significantly smaller than the execution times 4a, 4b, 4c, since data sets from only one data structure have to be retrieved and these data sets are already in a format as expected by the database queries 3a', 3b', 3c'. Furthermore, Figure 2 also shows that the execution times needed to prepare or pre-calculate the data set excerpts 5a', 5b', 5c' within data structure object 6 are much smaller than execution times 4a, 4b, 4c. This is due to the fact that contention situations can be prevented, since execution can be performed separately on the data set 5a, 5b, 5c, since only one access to the excerpts 5a', 5b', 5c' is sufficient. It is clear to a person skilled in the art that when the database queries 3a, 3b, 3b do not define operations which can be split between the different data sets 5a, 5b, 5c and can be executed separately as shown in Figure 2, then the executions as shown here would need to access all data sets 5a, 5b, and 5c. Nevertheless, still these executions would only need to be performed once and not several times as it is the case in Figure 1. Furthermore, even so the data set excerpts 5a', 5b', 5c' are in the depicted embodiment example retrieved in sequential order from data structure object 6, it is evident that they may also be retrieved in parallel from the data structure object 6. Furthermore, also results of operation performed with the excerpts 5a', 5b', 5c' can be retrieved from the data structure object 6. As such, a high number of database queries 3a', 3b', 3c' can be executed concurrently with less hardware resources needed, as compared to the case if all the database queries 3a', 3b', 3c' would be executed separately. This in turn allows to serve more users 2 - indicated by the higher number of humanoids - at least as long as the database queries 3a', 3b', 3c' are directed to the same semantic keys as the originally analyzed database queries 3a, 3b, 3c, for which the excerpts 5a', 5b', 5c'of data sets 5a, 5b, 5c are collected within the data structure object 6 respectively the results of the operations to be performed with the excerpts 5a', 5b', 5c' are collected in the data structure object 6.

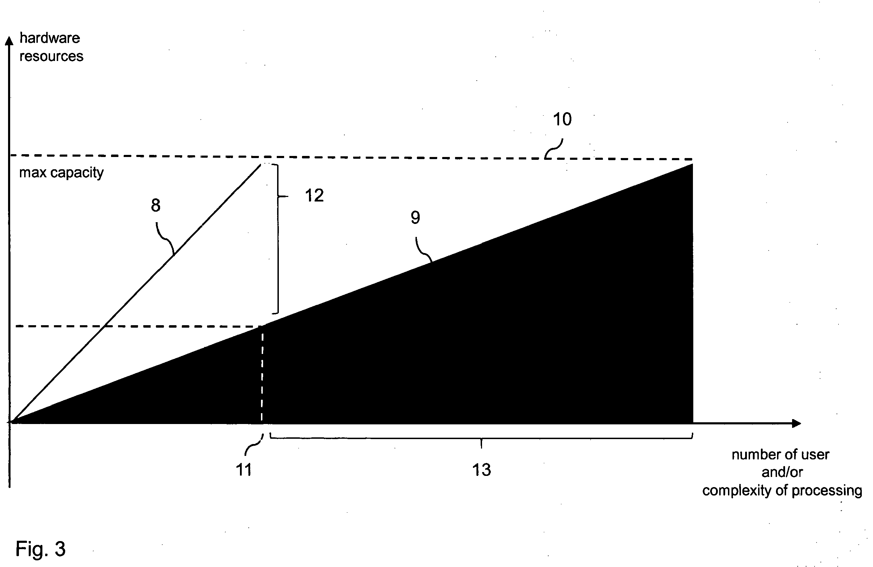

Figure 3 shows a graphical comparison between individual database query 3a, 3b, 3c executions and database query 3a', 3b', 3c' executions using a generated data structure object 6. Thereby, hardware resource use over number of users and/or complexity of processing is depicted. Graph 8 represents exemplarily the situation when database queries 3a, 3b, 3c are individually executed by the database system 1. Thereby, at a certain number of users and/or complexity of processing the physical limitation in terms of maximum hardware capacity of the database system 1 will be reached. Thereby, the maximum hardware capacity limit is indicated with reference number 10 and the maximum number of users and/or complexity of processing is indicated with reference number 11. Thereby, when these limits 10 and 11 are reached is dependent upon the database system 1 used and as such the slope of the graph 8. It has to be understood that the slope of graph 8 in Figure 3 is only for illustrating purposes and is dependent upon the actual database system 1 used. Compared to graph 8, graph 9 depicts the situation for the execution of database queries 3a', 3b', 3c' with a generated data structure object 6, wherein this data structure object is generated based on the analysis of the original database queries 3a, 3b, 3c and includes at least data set excerpts 5a', 5b' and 5c' and/or the results of operations to be performed with the excerpts 5a', 5b' and 5c'. It can be seen that the slope of graph 9 is much lower than the slope of graph 8, as such the maximum hardware capacity limit 10 is not reached at the same number of users and/or complexity of processing limit 11, but at much higher numbers of users and/or complexity of processing. As such, with the generated data structure object 6 better use can be made of the hardware resources, as is evident from the gap 12 between the graph 8 and the graph 9. Furthermore, a higher number of users and/or more complex processing can be serviced, as can be seen from the gap 13 between the graph 8 and graph 9. This is due to the fact that the data structure object 6 represents a cache for executing database queries 3a', 3b', 3c' by holding the respective data set excerpts 5a', 5b', 5c' which are indicated to be queried by the database queries 3a', 3b', 3c' and/or the results of operations to be performed with data set excerpts 5a', 5b', 5c'. As such, with the data structure object 6, a high number of database queries 3a', 3b', 3c' which all query the same semantic keys can be served without having to execute them separately.

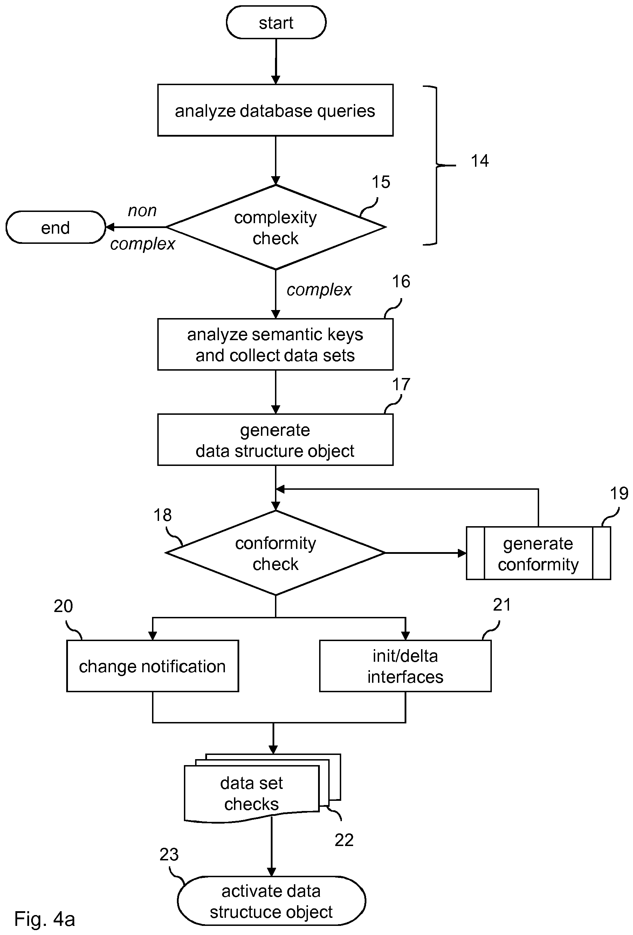

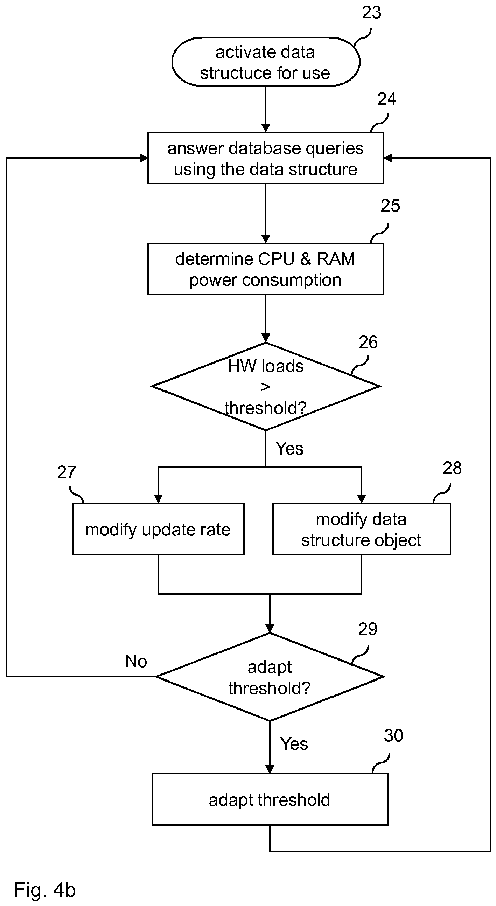

Figures 4a/4b show in terms of a flow chart, the generation of a data structure object 6 according to an embodiment of the current invention as well as the utilization and modification of the generated data structure object 6. After the method is started, database queries 3a, 3b, 3c are analyzed in step 14. Thereby, the database queries 3a, 3b, 3c can be analyzed with regards to their complexity and the data sets they indicate to be used in terms of the semantic keys within the database queries 3a, 3b, 3c. For example, the complexity of the database queries 3a, 3b, 3c can be determined from the source code of the database queries 3a, 3b, 3c themselves, for example by the semantic keys defined in the database queries 3a, 3b, 3c and the respective tier levels, the number of operations defined with the different semantic keys, or the type of operation defined, for example join, group, sort, and aggregate, or the indication that a simple database procedure is queried. Based on this information, a decision is taken in step 15 with regards to the complexity of the database queries 3a, 3b, 3c. Thereby, taking the decision in step 15 is part of the analyzing step 14. Thereby, in case the database queries 3a, 3b, 3c are non-complex, for example, low number of operations to be performed, semantic keys with low tier levels are indicated etc., these database queries 3a, 3b, 3c should be executed by the database system 1 without the generation of a data structure object 6, since also when these database queries 3a, 3b, 3c are requested by a large number of users 2, the hardware loads generated by executing these database queries 3a, 3b, 3c is neglectable in comparison to the overhead of generating a data structure object 6. Thereby, the degree of complexity a database system 1 can handle quicker individually as compared to generating a data structure object 6, is dependent upon the database system 1 itself and can be defined in terms of thresholds, either by the users 2 or by the database system 1 itself. However, if it is determined in step 15 that the database queries 3a, 3b, 3c are in fact complex, then the method continues to step 16. In step 16 the database queries 3a, 3b, 3c are again analyzed with regards to their semantic keys. It is apparent that for this second analyzing step also already the results of the first analyzing step 14 can be used. However, these two analyses performed in step 14 and step 16 can also be completely independent. When the semantic keys are identified which are going to be needed to execute the database queries 3a, 3b, 3c then in step 16 the respective data sets 5a, 5b, 5c or at least excerpt 5a', 5b', 5c' of the data sets 5a, 5b, 5c are collected and if needed results of operations performed with the excerpts 5a', 5b', 5c' are collected. Subsequently, in step 17, the data structure object 6 is generated. Generated in this context is to be understood to copy at least excerpts 5a', 5b', 5c' of the data sets 5a, 5b, 5c into the new data structure object 6 and/or store results of operations to be performed with the excerpts 5a', 5b', 5c' in the new data structure object 6. Thereby, the data structure object 6 can be stored in memory of the database system 1. It is apparent to a person skilled in the art that the data structure object 6 can also be stored elsewhere on other storing means, as long as the database system 1 has access to the other storing means.

Optionally and depending on the database system 1 used, it can be necessary to check the conformity of the generated data structure object 6 in step 18 and if needed generate conformity with the database system 1 in step 19. Conformity thereby can mean that the data structure object 6 is able to provide the reporting interface, RPI, of the database system 1 with information in the required format or structure, such that the reporting interface, RPI, can handle the data sets, or the different reporting tools connecting to the reporting interface can handle the data sets. Once the conformity of the data structure object 6 is given, in step 20 it is defined which notification infrastructure, e.g. triggers, data replication environments, etc. is used for the data sets 5a, 5b, 5c in connection with the data structure object 6, in order to allow the data structure object to get knowledge about changes in the data sets 5a, 5b, 5c. Since the data structure object 6 comprises data sets linked to excerpts 5a', 5b', 5c' of the data sets 5a, 5b, 5c also only changes with respect to these excerpt 5a', 5b', 5c' are necessary to be notified to the data structure object 6, so that the respective excerpts 5a', 5b', 5c' of data sets 5a, 5b, and 5c or the results of operations regarding the excerpts 5a', 5b', 5c' within the data structure object 6 can be updated. Once the notification infrastructure is defined in step 20, the actual delta interfaces are defined. These delta interfaces define which data sets included in the data structure object 6, based upon notifications defined in step 20 are actually updated. Thereby, the delta interface can also be based on the analysis of the database queries 3a, 3b, 3c and/or a service level agreement defining the update period of the data structure object 6. Optionally in step 22 data set checks can be performed. As such, it can be determined whether or not all data sets or at least the excerpts 5a', 5b' 5c' of the data sets 5a, 5b, 5c and or the results of operations indicated in the database queries 3a, 3b, 3c have been accounted for in the data structure object 6. Furthermore, it can be evaluated how the data sets in the data structure object 6 are actually used by the database queries 3a, 3b, and 3b and this can be used to optimize the structure of the data structure object 6 within itself. For example, the optimization can be as such that fragmentation of data sets is tried to be avoided. Subsequently, the data structure object 6 is activated for use in step 23. During the time the steps 14 to 23 are executed by the database system 1, the database queries 3a, 3b, 3c or subsequent database queries are executed by the execution engine 4 by using the data sets 5a, 5b, 5c.

Once the generated data structure object 6 is activated, the next database queries 3a', 3b', and 3c' are then executed or answered by using the generated data structure object 6. This is indicated in step 24. Due to the delta interfaces generated in step 21, it can then for every update necessary and for every data set in the data structure object 6 be individually predicted how much hardware loads or hardware resources this update will require. The hardware loads can thereby be expressed in terms of processing times, which are proportional to processor and memory power consumption, which can be determined in step 25. Although in this example the processing times are used as indicators for the hardware loads, it is evident that other indicators may be used. Furthermore, even so it is described that the hardware loads are predicted, this may only be the case for the first iteration. Hence, the first time the data structure object 6 is needed to be updated after it is activated in step 23. For the further updates, statistical values can be used or the values of the last iteration can be used. Once the hardware loads are determined, it is determined in step 26 whether or not the hardware loads exceed certain predefined thresholds. For example, it can be defined that the database system 1 for optimal use only shall use a certain amount of power. If it is determined that the hardware loads are within the thresholds defined, then the data structure object 6 can be further used for answering database queries 3a', 3b', 3c' without any modifications necessary. However, once the hardware loads exceed certain thresholds, the data structure object 6 is modified. Optionally, the data structure object 6 can also be modified, if it is determined that the hardware loads are much smaller than the predefined thresholds to optimal use the database system 1.

Two modifications of the data structure object 6 are described herein, namely modifying the update rate in step 27 and modifying the data structure object 6 itself in step 28.

Step 27 encompasses the modification of the update rate of the data sets of the data structure object 6. The update rate of the data structure object 6 has a direct influence on the hardware loads. By ease of the delta interfaces and the notification infrastructure defined in steps 20 and 21, it is known which data sets of the data structure object 6 have to be updated once a change in the data sets 5a, 5b, 5c in the database occurs. Dependent upon the analysis of the database queries 3a, 3b, 3c in steps 14 and 16 it can be determined whether a change in the data sets 5a, 5b, 5c in the database also always has to evoke an update of the data sets in the data structure object 6 or whether a factor between the frequency of change and the update rate can be introduced. As such, the update rate can de expressed as the frequency of change multiplied with a factor, wherein the factor is larger than one. In the case the modification in step 27 was initiated due to the hardware loads being much smaller than the thresholds, the factor can be lower than one.

Step 28 encompasses the modification of the data structure object 6 itself. Hence, for every tier level it can be determined how much hardware load is required to update the respective tier level. If the hardware loads exceed a threshold, the data structure object can be determined to exclude certain tier levels. For example, if the data structure object 6 comprises a tier level corresponding to revenues for a specific product, the next tier level equates to a specific year in which the revenues were made. Then this tier level which equates to the specific year means that updates for revenues in every month of this specific year and all days included in the month etc. have to be performed. Limiting the data set to the next tier level, e.g. the tier level which equates to a specific month, then all the other months are excluded and updates have only to be performed for the specified month and the respective days etc. However, when limiting the data sets in the data structure object 6 by excluding certain tier levels, an assessment of the hardware load savings has to be performed. If the hardware load saving is below a certain defined threshold, then the exclusion of the data set tier level is dismissed and another tier level is assessed. In case the modification in step 28 was initiated due to the hardware loads being much smaller than the thresholds, then the data structure object 6 can also be modified by including more tier levels. For example, if the current data structure object 6 comprises revenues for a specific product for a specific year, in a specific month, and the hardware loads indicate that there are still resources unused, then it makes sense to broaden the tier levels, as such to comprise revenues for a specific product for a specific year, hence including also all other months from the specific year which are formerly not being included in the data structure object 6. However, this makes only sense, if the analysis of the database queries 3a, 3b, 3c indicates that these values are actually needed, even only for a small fraction of database queries 3a, 3b, 3c, which would otherwise have to be executed without using the data structure object 6.

After the modification of the data structure object is performed in steps 27 and 28, which can be used solely or in combination, it can be determined in step 29 whether it is necessary to adapt the thresholds. The thresholds can thereby be adapted up to maximum values, which are given by the users 2 or the database system 1 itself. For example, if the database system 1 shall not procure any further hardware, the maximum values can be set according to the threshold which when exceeded would evoke to procure more hardware. However, the maximum thresholds can also be set according to service level agreements, in order to ensure that they are upheld. Furthermore, the maximum threshold values can also be set according to maximum power consumption constraints set for the database system 1, which for example may reflect the optimal power consumptions for the database system 1 or may simply be constraints by costs of operating the database system 1.

If it is determined that the threshold does not need to be adapted, then the method can return to step 24 by answering database queries 3a', 3b', 3c' by using the database structure object 6. Otherwise, in case it is decided to adapt the thresholds this is done in step 30. Thereby, the adaption of the thresholds can be performed based on the previous run, hence the previous execution of the database queries 3a', 3b', 3c'. As such, the adaptation can be based on historical and statistical considerations. Afterwards it is returned to step 24.

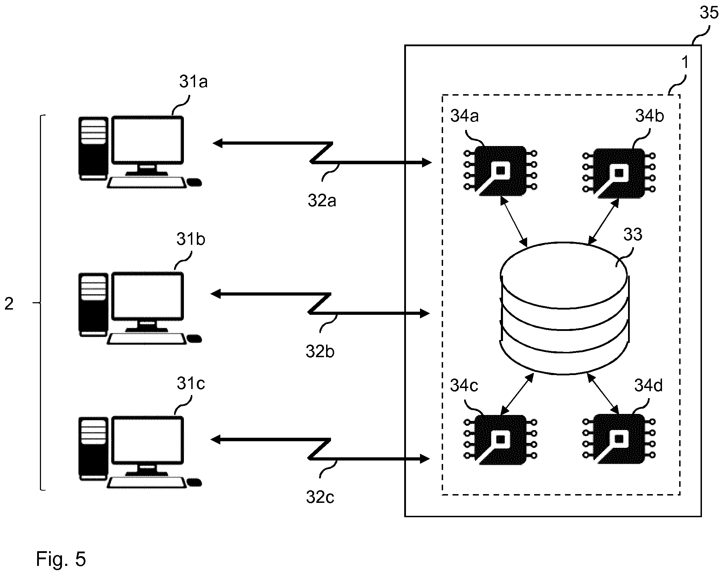

Figure 5 shows a schematic view of a database server 35 holding a database system 1 according to an embodiment of the current invention. The database system 1 encompasses at least one processor 34a, 34b, 34c, 34d which is coupled to a memory 33 in form of a database. The memory stores the data sets 5a, 5b, 5c and the at least one processor 34a, 34b, 34c, 34d is capable of performing dedicated database processes.

The database server 35 is connected to users 2 in form of client computers 31a, 31b, 31c via TCP/IP connections 32, or any other connections wireless or wirelessly, which allow access to the database server 35. Via these connections, the client computers 31a, 31b, 31c can direct database queries 3a, 3a', 3b, 3b', 3c, 3c' to the database server 35.

Database queries 3a', 3b', 3c' can then according to the methods described herein be executed using a data structure object 6 generated within the memory 33, wherein the processing is performed by the at least one processor 34a, 34b, 34c, 34d of the database server 35.

It is understood by a person skilled in the art that even if in Figure 5 only one database server with a plurality of processors is shown, the database can also be implemented by ease of a computer cluster with several computers, which all can hold a part of the database.

## Claims

1. A method for operating a database system (1), the method comprising:
analyzing (14) a plurality of database queries (3a, 3b, 3c) with regards to data sets the database queries (3a, 3b, 3c) enquire and operations to be performed with the data sets;
determining (15) the complexity of the plurality of database queries (3a, 3b, 3c) based at least on one of: determining the number of same database queries (3a, 3b, 3c) in the plurality of database queries (3a, 3b, 3c), determining the predicted processing times for the plurality of database queries (3a, 3b, 3c) to be executed, determining the predicted hardware loads for the plurality of database queries (3a, 3b, 3c) to be executed, determining whether the plurality of database queries (3a, 3b, 3c) are simple database procedures, and determining the tier level of the data sets (5a, 5b, 5c) indicated in the plurality of database queries (3a, 3b, 3c);
generating (17) a data structure object (6) within a database of the database system (1) when the plurality of database queries (3a, 3b, 3c) are determined to be complex, wherein the data structure object (6) comprises results of the operations defined to be performed with the data sets present in the database of the database system (1) and indicated to be enquired by the plurality of database queries (3a, 3b, 3c);
predicting for every data set included in the data structure object (6) a hardware load for updating this specific data set, dependent upon a change of the at least one data set present in the database of the database system (1);
determining an update rate for updating the at least one data set of the data structure object (6) based at least in part on the predicted hardware load and predicted times of peak hardware loads;
dynamically modifying (23) the data structure object (6) based on the predicted hardware load, wherein dynamically modifying (23) comprises updating the at least one data set of the data structure object (6) according to the determined update rate, wherein updating comprises at least one of including, excluding, or changing the at least one data set of the data structure object (6); and
answering (24) next database queries (3a', 3b', 3c') using the data structure object (6).

2. The method of claim 1, wherein the update rate is determined in addition based on a service level agreement, SLA.

3. The method of any of claims 1 to 2, further comprising:
monitoring the current update rates of at least two data structure objects (6); and
shifting a starting time of an update cycle of a first data structure object (6) of the at least two data structure objects (6) with respect to a starting time of an update cycle of a second data structure object (6) of the at least two data structure objects (6) based on the monitored current update rates.

4. The method of any of claims 1 to 3, wherein the hardware loads are predicted as processing times.

5. The method of any of claims 1 to 4, wherein the database system (1) is a disk operated database system, or an in-memory database system, or a combination thereof.

6. An apparatus for operating a database system (1), the apparatus comprising:
memory (33) for storing data sets (5a, 5b, 5c) of a database of the database system (1);
at least one processor (34a, 34b, 34c, 34d), wherein the at least one processor (34a, 34b, 34c, 34d) is configured to
analyze a plurality of database queries (3a, 3b, 3c) with regards to data sets the database queries (3a, 3b, 3c) enquire and operations to be performed with the data sets;
determine the complexity of the plurality of database queries (3a, 3b, 3c) based at least on one of: determining the number of same database queries (3a, 3b, 3c) in the plurality of database queries (3a, 3b, 3c), determining the predicted processing times for the plurality of database queries (3a, 3b, 3c) to be executed, determining the predicted hardware loads for the plurality of database queries (3a, 3b, 3c) to be executed, determining whether the plurality of database queries (3a, 3b, 3c) are simple database procedures, and determining the tier level of the data sets (5a, 5b, 5c) indicated in the plurality of database queries (3a, 3b, 3c); generate a data structure object (6) within the database of the database system (1) when the plurality of database queries (3a, 3b, 3c) are determined to be complex, wherein the data structure object (6) comprises results of the operations defined to be performed with the data sets present in the database of the database system (1) and indicated to be enquired by the plurality of database queries (3a, 3b, 3c);
predicting for every data set included in the data structure object (6) a hardware load on the memory (33) and/or the at least one processor (34a, 34b, 34c, 34d) for updating this specific data set of the data structure object (6) dependent upon a change of the at least one data set present in the database of the database system (1);
determine an update rate for updating the at least one data set of the data structure object (6) based at least in part on the predicted hardware loads and predicted times of peak hardware loads; dynamically modify the data structure object (6) based on the predicted hardware loads, wherein dynamically modifying comprises update the at least one data set of the data structure object (6) according to the determined update rate, wherein updating comprises at least one of including, excluding, or changing the at least one data set of the data structure object (6); and
answer next database queries (3a', 3b', 3c') using the data structure object (6).

7. The appartus of claim 6, wherein the at least one processor (34a, 34b, 34c, 34d) is further configured to:
derive from the predicted hardware loads, the power consumtion of the memory (33) and the at least one processor (34a, 34b, 34c, 34d).

8. A computer program product, the computer program product comprising:
code for causing a processor connected to a memory to perform a method according to any of claims 1 to 5, when executed.

## Patentansprüche

1. Ein Verfahren zum Betreiben eines Datenbanksystems (1), das Verfahren aufweisend:
Analysieren (14) einer Vielzahl von Datenbankabfragen (3a, 3b, 3c) in Bezug auf Datensätze, die Datenbankabfragen (3a, 3b, 3c) anfragen, und Operationen, die mit den Datensätzen durchgeführt werden sollen;
Bestimmen (15) der Komplexität von der Vielzahl von Datenbankabfragen (3a, 3b, 3c) basierend zumindest teilweise auf einem von: Bestimmen der Anzahl von gleichen Datenbankabfragen (3a, 3b, 3c) in der Vielzahl von Datenbankabfragen (3a, 3b, 3c), Bestimmen der vorhergesagten Verarbeitungszeiten für die Vielzahl von Datenbankabfragen (3a, 3b, 3c), die ausgeführt werden sollen, Bestimmen der vorhergesagten Hardware-Last für die Vielzahl von Datenbankabfragen (3a, 3b, 3c), die ausgeführt werden sollen, Bestimmen ob die Vielzahl von Datenbankabfragen (3a, 3b, 3c) einfache Datenbankprozeduren sind, und Bestimmen des Rangniveaus von den Datensätzen (5a, 5b, 5c) angezeigt in der Vielzahl von Datenbankabfragen (3a, 3b, 3c);
Erzeugen (17) eines Datenstrukturobjekts (6) innerhalb einer Datenbank von dem Datenbanksystem (1) wenn bestimmt wird, dass die Vielzahl von Datenbankabfragen (3a, 3b, 3c) komplex ist, wobei das Datenstrukturobjekt (6) aufweist Ergebnisse von den Operationen festgelegt, um ausgeführt zu werden mit den Datensätzen enthalten in der Datenbank von dem Datenbanksystem (1) und angezeigt angefragt zu werden durch die Vielzahl von Datenbankabfragen (3a, 3b, 3c);
Vorhersagen für jeden Datensatz enthalten in dem Datenstrukturobjekt (6) einer Hardware-Last für aktualisieren dieses spezifischen Datensatzes abhängig von einer Veränderung von dem zumindest einen Datensatz enthalten in der Datenbank von dem Datenbanksystem (1);
Bestimmen einer Aktualisierungsrate für Aktualisieren des zumindest einen Datensatzes von dem Datenstrukturobjekt (6) basierend zumindest teilweise auf der vorhergesagten Hardware-Last und vorhergesagten Zeiten von Spitzen in den Hardware-Lasten;
dynamisches Modifizieren (23) des Datenstrukturobjekts (6) basierend auf der vorhergesagten Hardware-Last, wobei dynamisches Modifizieren (23) aufweist Aktualisieren des zumindest einen Datensatzes von dem Datenstrukturobjekt (6) gemäß der bestimmten Aktualisierungsrate, wobei Aktualisieren aufweist zumindest eines von Einfügen, Ausschließen oder Verändern des zumindest einen Datensatzes von dem Datenstrukturobjekt (6); und Beantworten (24) nächster Datenbankabfragen (3a', 3b', 3c') verwendend das Datenstrukturobjekt (6).

2. Das Verfahren von Anspruch 1, wobei die Aktualisierungsrate bestimmt wird zusätzlich basierend auf einer Dienst-Niveau-Vereinbarung, SLA.

3. Das Verfahren von irgendeinem von Ansprüchen 1 oder 2, weiter aufweisend:
Überwachen der gegenwärtigen Aktualisierungsraten von zumindest zwei Datenstrukturobjekten (6); und
Verschieben einer Start-Zeit von einem Aktualisierungszyklus von einem ersten Datenstrukturobjekt (6) von den zumindest zwei Datenstrukturobjekten (6) hinsichtlich einer Start-Zeit von einem Aktualisierungszyklus von einem zweiten Datenstrukturobjekt (6) von den zumindest zwei Datenstrukturobjekten (6) basierend auf den überwachten gegenwärtigen Aktualisierungsraten.

4. Das Verfahren von irgendeinem von Ansprüchen 1 bis 3, wobei die Hardware-Lasten vorhergesagt werden als Prozess-Zeiten.

5. Das Verfahren von irgendeinem von Ansprüchen 1 bis 4, wobei das Datenbanksystem (1) eine Disk-betriebenes Datenbanksystem oder ein In-Memory-Datenbanksystem oder eine Kombination hiervon ist.

6. Eine Vorrichtung zum Betreiben eines Datenbanksystems (1), die Vorrichtung aufweisend:
Speicher (33) zum Speichern von Datensätzen (5a, 5b, 5c) von einer Datenbank von dem Datenbanksystem (1);
zumindest einen Prozessor (34a, 34b, 34c, 34d), wobei der zumindest eine Prozessor (34a, 34b, 34c, 34d) konfiguriert ist zum
Analysieren einer Vielzahl von Datenbankabfragen (3a, 3b, 3c) in Bezug auf Datensätze, die Datenbankabfragen (3a, 3b, 3c) anfragen, und Operationen, die mit den Datensätzen durchgeführt werden sollen;
Bestimmen der Komplexität von der Vielzahl von Datenbankabfragen (3a, 3b, 3c) basierend zumindest teilweise auf einem von: Bestimmen der Anzahl von gleichen Datenbankabfragen (3a, 3b, 3c) in der Vielzahl von Datenbankabfragen (3a, 3b, 3c), Bestimmen der vorhergesagten Verarbeitungszeiten für die Vielzahl von Datenbankabfragen (3a, 3b, 3c), die ausgeführt werden sollen, Bestimmen der vorhergesagten Hardware-Last für die Vielzahl von Datenbankabfragen (3a, 3b, 3c), die ausgeführt werden sollen, Bestimmen ob die Vielzahl von Datenbankabfragen (3a, 3b, 3c) einfache Datenbankprozeduren sind, und Bestimmen des Rangniveaus von den Datensätzen (5a, 5b, 5c) angezeigt in der Vielzahl von Datenbankabfragen (3a, 3b, 3c);
Erzeugen eines Datenstrukturobjekts (6) innerhalb einer Datenbank von dem Datenbanksystem (1) wenn bestimmt wird, dass die Vielzahl von Datenbankabfragen (3a, 3b, 3c) komplex ist, wobei das Datenstrukturobjekt (6) aufweist Ergebnisse von den Operationen festgelegt, um ausgeführt zu werden mit Datensätzen enthalten in der Datenbank von dem Datenbanksystem (1) und angezeigt angefragt zu werden durch die Vielzahl von Datenbankabfragen (3a, 3b, 3c); Vorhersagen für jeden Datensatz enthalten in dem Datenstrukturobjekt (6) einer Hardware-Last auf dem Speicher (33) und/oder dem zumindest einen Prozessor (34a, 34b, 34c, 34d) für aktualisieren dieses spezifischen Datensatzes von dem Datenstrukturobjekt (6) abhängig von einer Veränderung von dem zumindest einen Datensatz enthalten in der Datenbank von dem Datenbanksystem (1); Bestimmen einer Aktualisierungsrate für Aktualisieren des zumindest einen Datensatzes von dem Datenstrukturobjekt (6) basierend zumindest teilweise auf der vorhergesagten Hardware-Last und vorhergesagten Zeiten von Spitzen-Hardware-Lasten;
dynamischen Modifizieren des Datenstrukturobjekts (6) basierend auf der vorhergesagten Hardware-Last, wobei dynamisches Modifizieren (23) aufweist Aktualisieren des zumindest einen Datensatzes von dem Datenstrukturobjekt (6) gemäß der bestimmten Aktualisierungsrate, wobei Aktualisieren aufweist zumindest eines von Einfügen, Ausschließen oder Verändern des zumindest einen Datensatzes von dem Datenstrukturobjekt (6); und Beantworten (24) nächster Datenbankabfragen (3a', 3b', 3c') verwendend das Datenstrukturobjekt (6).

7. Die Vorrichtung von Anspruch 6, wobei der zumindest eine Prozessor (34a, 34b, 34c, 34d) weiter konfiguriert ist zum:
Ableiten von der vorhergesagten Hardware-Last, den Leistungsverbrauch von dem Speicher (33) und dem zumindest einen Prozessor (34a, 34b, 34c, 34d).

8. Ein Computerprogrammprodukt, das Computerprogrammprodukt aufweisend:
Code zum Verursachen, dass ein Prozessor verbunden mit einem Speicher ein Verfahren gemäß irgendeinem von Ansprüchen 1 bis 5 durchführt, wenn er ausgeführt wird.

## Revendications

1. Un procédé de mise en oeuvre d'un système de base de données (1), le procédé comprenant :
l'analyse (14) d'une pluralité de requêtes de base de données (3a, 3b, 3c) par rapport à des ensembles de données qu'interrogent les requêtes de base de données (3a, 3b, 3c) et des opérations à exécuter avec les ensembles de données ;
la détermination (15) de la complexité de la pluralité des requêtes de base de données (3a, 3b, 3c) sur la base d'au moins l'une d'entre : la détermination du nombre de requêtes de base de données identiques (3a, 3b, 3c) dans la pluralité de requêtes de base de données (3a, 3b, 3c), la détermination des temps de traitement prévus pour la pluralité de requêtes de base de données (3a, 3b, 3c) à exécuter, la détermination des charges matérielles prévues pour la pluralité de requêtes de base de données (3a, 3b, 3c) à exécuter, la détermination si la pluralité de requêtes de base de données (3a, 3b, 3c) sont ou non des procédures de base de données simples, et la détermination du niveau catégoriel des ensembles de données (5a, 5b, 5c) indiqués dans la pluralité de requêtes de base de données (3a, 3b, 3c) ;
la génération (17) d'un objet de structure de données (6) au sein d'une base de données du système de base de données (1) lorsque la pluralité de requêtes de base de données (3a, 3b, 3c) sont déterminées comme étant complexes, l'objet de structure de données (6) comprenant des résultats des opérations définies comme étant à exécuter avec les ensembles de données présents dans la base de données du système de base de données (1) et indiqués comme devant être interrogés par la pluralité de requêtes de base de données (3a, 3b, 3c) ;
la prévision pour chaque ensemble de données inclus dans l'objet de structure de données (6) d'une charge matérielle pour la mise à jour de cet ensemble de données spécifique, en fonction d'une modification du au moins un ensemble de données présent dans la base de données du système de base de données (1) ;
la détermination d'une cadence de mise à jour pour la mise à jour du au moins un ensemble de données de l'objet de structure de données (6) au moins en partie sur la base de la charge matérielle prévue et des temps prévus des pics de charge matérielle ;
la modification dynamique (23) de l'objet de structure de données (6) sur la base de la charge matérielle prévue, la modification dynamique (23) comprenant la mise à jour du au moins un ensemble de données de l'objet de structure de données (6) en fonction de la cadence de mise à jour déterminée, la mise à jour comprenant au moins l'une d'entre l'inclusion, l'exclusion ou la modification du au moins un ensemble de données de l'objet de structure de données (6) ; et
la réponse (24) aux requêtes de base de données suivantes (3a', 3b', 3c') en utilisant l'objet de structure de données (6) .

2. Le procédé de la revendication 1, dans lequel la cadence de mise à jour est déterminée en outre sur la base d'un accord de niveau de service, SLA.

3. Le procédé de l'une des revendications 1 à 2, comprenant en outre :
la surveillance des cadences de mise à jour courantes d'au moins deux objets de structure de données (6) ; et
le décalage d'un instant de début d'un cycle de mise à jour d'un premier objet de structure de données (6) des au moins deux objets de structure de données (6) par rapport à un instant de début d'un cycle de mise à jour d'un second objet de structure de données (6) des au moins deux objets de structure de données (6) sur la base des cadences de mise à jour courantes surveillées.

4. Le procédé de l'une des revendications 1 à 3, dans lequel les charges matérielles sont estimées sous forme de temps de traitement.

5. Le procédé de l'une des revendications 1 à 4, dans lequel le système de base de données (1) est un système de base de données fonctionnant sur disque, ou un système de base de données interne à une mémoire, ou une combinaison des précédents.

6. Un appareil de mise en oeuvre d'un système de base de données (1), l'appareil comprenant :
une mémoire (33) pour stocker des ensembles de données (5a, 5b, 5c) d'une base de données du système de base de données (1) ;
au moins un processeur (34a, 34b, 34c, 34d), le au moins un processeur (34a, 34b, 34c, 34d) étant configuré pour assurer :
l'analyse d'une pluralité de requêtes de base de données (3a, 3b, 3c) par rapport à des ensembles de données qu'interrogent les requêtes de base de données (3a, 3b, 3c) et des opérations à exécuter avec les ensembles de données ;
la détermination de la complexité de la pluralité des requêtes de base de données (3a, 3b, 3c) sur la base d'au moins l'une d'entre : la détermination du nombre de requêtes de base de données identiques (3a, 3b, 3c) dans la pluralité de requêtes de base de données (3a, 3b, 3c), la détermination des temps de traitement prévus pour la pluralité de requêtes de base de données (3a, 3b, 3c) à exécuter, la détermination des charges matérielles prévues pour la pluralité de requêtes de base de données (3a, 3b, 3c) à exécuter, la détermination si la pluralité de requêtes de base de données (3a, 3b, 3c) sont ou non des procédures de base de données simples, et la détermination du niveau catégoriel des ensembles de données (5a, 5b, 5c) indiqués dans la pluralité de requêtes de base de données (3a, 3b, 3c) ;
la génération d'un objet de structure de données (6) au sein d'une base de données du système de base de données (1) lorsque la pluralité de requêtes de base de données (3a, 3b, 3c) sont déterminées comme étant complexes, l'objet de structure de données (6) comprenant des résultats des opérations définies comme étant à exécuter avec les ensembles de données présents dans la base de données du système de base de données (1) et indiqués comme devant être interrogés par la pluralité de requêtes de base de données (3a, 3b, 3c) ;
la prévision pour chaque ensemble de données inclus dans l'objet de structure de données (6) d'une charge matérielle sur la mémoire (33) et/ou sur le au moins un processeur (34a, 34b, 34c, 34d) pour la mise à jour de cet ensemble de données spécifique de l'objet de structure de données (6) en fonction d'une modification du au moins un ensemble de données présent dans la base de données du système de base de données (1) ;
la détermination d'une cadence de mise à jour pour la mise à jour du au moins un ensemble de données de l'objet de structure de données (6) au moins en partie sur la base de la charge matérielle prévue et des temps prévus des pics de charge matérielle ;
la modification dynamique de l'objet de structure de données (6) sur la base des charges matérielles prévues, la modification dynamique comprenant la mise à jour du au moins un ensemble de données de l'objet de structure de données (6) en fonction de la cadence de mise à jour déterminée, la mise à jour comprenant au moins l'une d'entre l'inclusion, l'exclusion ou la modification du au moins un ensemble de données de l'objet de structure de données (6) ; et
la réponse (24) aux requêtes de base de données suivantes (3a', 3b', 3c') en utilisant l'objet de structure de données (6) .

7. L'appareil de la revendication 6, dans lequel le au moins un processeur (34a, 34b, 34c, 34d) est en outre configuré pour assurer :
la dérivation à partir des charges matérielles prévues, de la consommation énergétique de la mémoire (33) et du au moins un processeur (34a, 34b, 34c, 34d).

8. Un produit de programme informatique, le produit de programme informatique comprenant :
du code pour faire en sorte qu'un processeur connecté à une mémoire mette en oeuvre un procédé selon l'une des revendications 1 à 5, lorsqu'il est exécuté.
